# EUROPEAN PATENT SPECIFICATION

(11) **EP 3 751 009 B1**
(45) Date of publication and mention of the grant of the patent: **19.01.2022**
(21) Application number: 20178094.7
(22) Date of filing: 03.06.2020
(51) Int. Cl.: C14C 15/00, C14C 11/00, C09D 175/04, C09D 133/00, C14B 1/58, B05D 3/02, B05D 1/02, B05D 1/40, B05D 3/12, B05D 5/08, B05D 7/12, C14B 7/00

(54) **PROCESS FOR TREATING SHEET-LIKE ELEMENTS**
VERFAHREN ZUR BEHANDLUNG VON FLACHMATERIAL-ELEMENTEN
PROCÉDÉ DE TRAITEMENT D'ÉLÉMENTS EN FORME DE FEUILLE

(30) Priority: 07.06.2019 IT 201900008388
(43) Date of publication of application: 16.12.2020
(73) Proprietor: Evolution Tech S.r.l., 36070 Trissino (VI) (IT)
(72) Inventor: ANTONELLO, Marchino, 36053 Gambellara (VI) (IT); PAVAN, Alberto, 36030 Costabissara (VI) (IT); LOVATO, Denis, 36040 Sarego (VI) (IT)
(74) Representative: Caldon, Giuliano

(56) References cited:
- US-A- 3 682 738
- US-A1- 2015 276 311
- DATABASE WPI Week 201946 Thomson Scientific, London, GB; AN 2019-49123T XP002797432, & CN 109 777 900 A (DONGGUAN YINENGDA NEW MATERIAL TECHNOLOGY CO LTD) 21 May 2019 (2019-05-21)

## Description

### Field of application

The present invention regards a process for treating sheet-like elements, according to the preamble of independent claim 1.

The present process has particular application in the tanning industry for finishing treatments of sheet-like elements such as hides, so to extend one or more coating layers made of thermoplastic material on the hides, at least partially dry such coating layers and stretch or print the hides.

The process according to the invention is thus advantageously intended to be used in the tanning industry and more generally in the textile industry.

### State of the art

In the tanning industry, different types of processes are known for treating sheet-like elements, such as in particular animal hides.

In particular, the processes of known type provide for employing apparatuses composed of a plurality of operating stations, placed one after the other and connected to each other by means of advancing means, such as conveyor belts or rollers, in order to subject the hides to different operating steps such to bring the hides themselves from a rough state, immediately after the tanning, to a finished state, ready for being used, for example in the fashion sector, in the furnishing sector or in the automobile sector.

Such apparatuses of known type generally receive the hides to be treated from a grinding station, in which a grinding machine is arranged that is adapted to execute a first mechanical working of smoothing the hide. The smoothed hide exiting from the grinding station is known in the technical jargon with the term "crust".

The apparatuses of known type then receive the layers of smoothed hide and they convey them to a first working station, which generally comprises a coating station.

In particular, the coating stations of known type comprise a pigment application machine adapted to deposit, on the smoothed hide, a coating layer which usually comprises a liquid pigmented thermoplastic material.

Following the coating station, a drying oven is generally provided that is adapted to dry the liquid coating layer deposited by the pigment application machine.

The drying ovens employed in the apparatuses of known type are generally provided with traversing tunnels, in which the hides to be dried are conveyed and in which heating means are arranged that are adapted to heat such hides up to drying temperatures higher than 100 degrees centigrade. In particular, the tunnels of the drying ovens of known type are generally provided with a length of about 15 meters, and the hides are brought to advance at their interior with traversing speed on the order of 10 meters per minute.

Following the drying oven, the dried hide requires a rest step, which lasts about 24 hours, before it is able to undergo further working, since it is necessary that the coating layer adheres in depth in the hide.

Therefore, the apparatuses of known type provide for a storage station following the drying oven, in which the hides are left to rest after having exited from the drying oven.

At the end of the rest step, the hides are picked up from the storage station and are introduced in a compression station, in which a press for stretching and/or printing is provided.

Generally, such stretching press and/or printing press is of rotary type, which comprises two cylinders with parallel axes, counter-rotating and together delimiting a slit that is traversed by the hides to be treated. More in detail, the two cylinders are usually placed one on top of the other, in a manner such that the hides which pass through their slit can proceed along a substantially horizontal path.

In addition, the upper cylinder of the rotary presses of known type is heated so as to render partially fluid - and hence easily workable - the coating layer deposited on the hide. In particular, the temperature of the upper cylinder can vary from 50 degrees centigrade, if the hide to be treated is preheated by suitable heating means comprised in the advancing means interposed between the storage station and the press itself, up to a temperature of 160 degrees centigrade, if the hide to be treated does not undergo any preheating after having been picked up from the storage station.

The apparatuses for treating the hides of known type briefly described up to now have in practice shown that they do not lack drawbacks.

The main drawback lies in the high length of the tunnels of the drying ovens, which generally is comprised between 12 and 18 meters. In particular, such high length is necessary for allowing a suitable removal of the moisture present in the coating layer so as to obtain a completely dried hide.

It is however easily understandable that drying ovens provided with such long tunnels involve high costs for working the hides. In addition, such drying ovens involve a considerable size and generally require much of the space of the apparatuses of known type, which normally are provided with lengths of about 40 meters.

A further drawback of the apparatuses for treating the hides of known type lies in the fact that the dried hide requires a rest step, which has a duration of about 24 hours, before undergoing the subsequent working. Such rest step involves a considerable lengthening of the production times and requires the arranging of a storage station, and thus additional bulk.

A further drawback of the apparatuses for treating the hides of known type lies in the fact that the upper cylinder of the stretching press and/or printing press must be heated to high temperatures in order to allow the working of the coating layer of the hides.

Such high temperatures of the upper cylinder involve the risk of forming air bubbles between the various layers that compose the hide, and more particularly between its "flesh side" (i.e. the side of the hide originally directed directed towards the flesh of the animal from which the hide was obtained) and its "skin side" (i.e. the side of the hide originally exposed to the air).

In addition, the high temperatures of the upper cylinder of the stretching press and/or printing press can partially burn the coating layer, making a shiny effect on the hide that might not be appreciated in some market sectors, such as in the automobile field, since such effect confers an artificial and hence not very natural appearance to the hide.

Also known, from document CN 109777900, is a process for coating hides which provides for spraying, by means of a plurality of nozzles, a water-based coating material on a hide transported by a conveyance belt. Then, the process provides for drying the coated hide by means of an oven and then impressing a motif thereon by means of an embossing machine. Such process of known type does not in any case allow resolving the abovementioned efficiency limits.

### Presentation of the invention

In this situation, the problem underlying the present invention is therefore that of eliminating the problems of the abovementioned prior art, by providing a process for treating sheet-like elements, and in particular hides, which employs an apparatus provided with limited size.

A further object of the present invention is to provide a process for treating sheet-like elements which allows limiting the times for working the sheet-like elements themselves.

A further object of the present invention is to provide a process for treating sheet-like elements which reduces the risk of forming defects on the sheet-like element, such as air bubbles or shiny zones.

A further object of the present invention is to provide a process for treating sheet-like elements which is entirely efficient and reliable in operation.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent a merely exemplifying and non-limiting embodiment of the invention, in which:
- figure 1 shows a side schematic view of the apparatus employed in the process for treating sheet-like elements, object of the present invention;

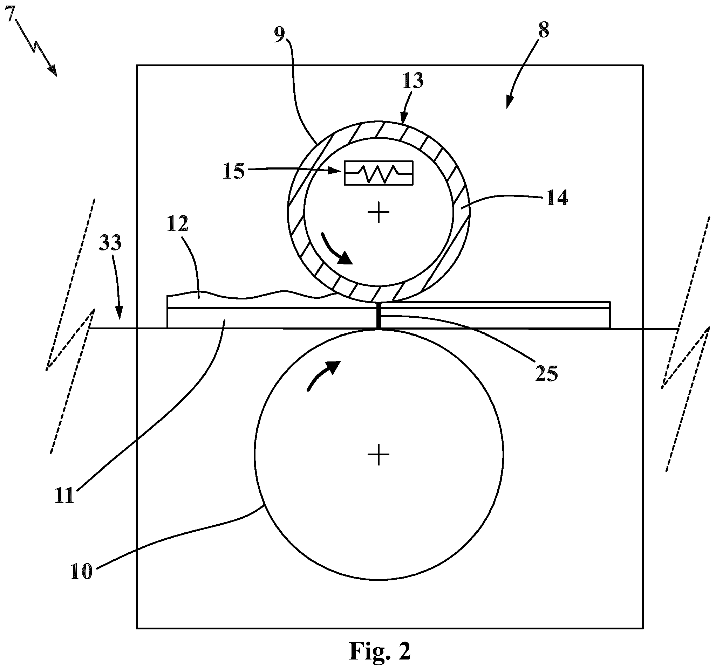

- figure 2 shows a side schematic view of a detail of the apparatus of figure 1, in which the compression station of the apparatus itself is better illustrated.

### Detailed description of a preferred embodiment

The present invention regards a process for treating sheet-like elements 11, which will be described hereinbelow also on the basis of an apparatus for the attainment thereof.

In particular, the present process for treating sheet-like elements 11 is advantageously adapted to be employed for treating hides and skins in general. Nevertheless, the process may also be used for treating further, different sheet-like elements, such as fake hides, fabrics, synthetic materials or other items, without departing from the protective scope defined by the claims by the present patent.

The process for treating sheet-like elements 11 according to the present invention is obtained by means of an apparatus 1, which comprises a plurality of working stations adapted to execute different treatments of the sheet-like elements 11, which are placed preferably in succession one after the other and are advantageously connected to each other through advancing means 30, such as conveyor belts on which the sheet-like elements 11 are intended to be placed.

The present apparatus 1 comprises a coating station 2 provided with depositing means 3 adapted to deposit a thermoplastic material 4, such as a dye or a paint.

The present apparatus 1 also comprises a drying station 5 provided with heating means 6 adapted to control the temperature within the drying station 5 itself, as is better described hereinbelow.

Advantageously, the heating means 6 can be of radiant type, for example constituted by infrared lamps, or by radiant ducts in which a carrier fluid circulates at high temperatures, such as exhaust gas of a combustion, vapor, overheated water, diathermic oil. Further embodiments of the heating means 6 are of course intended as being possible, without departing from the scope of the present patent.

In addition, the present apparatus 1 comprises a compression station 7 comprising at least one press 8, which is provided with at least two compression elements 9, 10 placed facing each other and preferably separated from each other by a passage slit 25.

The present process then comprises a plurality of treatment steps, each of which advantageously intended to be made in a corresponding working station of the apparatus 1.

According to the present invention, the present process comprises a coating step, in which at least one sheet-like element 11 traverses the coating station 2 and in which the depositing means 3 deposit, on the sheet-like element 11 itself, a coating layer 12 comprising the thermoplastic material 4 in liquid state.

In accordance with the preferred embodiment illustrated in the enclosed figures, the depositing means 3 of the coating station 2 comprise a spray pigment application machine advantageously provided with a rotary carousel 21, which carries, mounted thereon, a plurality of pistols 22 adapted to spray the thermoplastic material 4.

Advantageously, in addition, the coating station 2 comprises first actuation means 31, which are arranged to cross the coating station 2 itself, and on which the sheet-like elements 11 to be coated are intended to be placed.

More in detail, the pistols 22 of the rotary carousel 21 of the coating station 2 are advantageously directed towards the first actuation means 31 in order to deposit the coating layer 12 on the surface of the sheet-like element 11 directed towards such pistols 22.

Otherwise, in accordance with an alternative embodiment not illustrated in the enclosed figures, the depositing means 3 of the coating station 2 comprise a spreader machine provided with at least two counter-rotating spreader rollers, between which the sheet-like element 11 to be coated is susceptible of passing.

More in detail, the aforesaid spreader machine is provided with means for feeding the thermoplastic material 4, which are adapted to uniformly spread the layer of thermoplastic material 4 on the lateral surface of at least one of the two spreader rollers, which in turn deposits the thermoplastic material 4 on the sheet-like element 11, which is thus coated with the coating layer 12.

Preferably, the depositing means 3 of the coating station 2 are adapted to deposit a dose of thermoplastic material 4 comprised between 4 and 8 grams per square foot of sheet-like element 11, so as to form a coating layer 12 comprising the thermoplastic material 4 having a specific thickness, in particular comprised between several micrometers and several tens of millimeters.

Advantageously, the thermoplastic material 4 deposited by the depositing means 3 is a pigmenting material, preferably selected form a group comprising acrylic polymers, polyurethane, butadienyl and vinyl.

The present process, following the coating step, comprises a drying step, in which the sheet-like element 11 with the just-described coating layer 12 traverses the drying station 5 and in which the heating means 6 apply a thermal treatment to the sheet-like element 11.

In accordance with the preferred embodiment illustrated in the enclosed figures, the drying station 5 comprises a drying oven with tunnel, which is extended between an inlet section 23 and an outlet section 24. Advantageously, the drying station 5 also comprises second advancing means 32, which are placed to cross the drying oven with tunnel between its inlet station 23 and its outlet station 24, and above this the sheet-like element 11 to be dried is intended to be placed.

During the drying step, the heating means 6 are then adapted to heat the air within the drying station 5 and consequently they are adapted to heat the sheet-like element 11 which traverses it so as to execute the aforesaid thermal treatment.

Following the drying step, the present process provides a compression step, in which the sheet-like element 11 traverses the compression station 7 and in which the compression elements 9, 10 of the press 8 compress between them the sheet-like element 11 itself in order to impress the coating layer 12 on the sheet-like element 11 following the thermal treatment. In accordance with the idea underlying the present invention, in the drying step of the present process, the thermal treatment determines a partial drying of the coating layer 12 of the sheet-like element 11, which is supplied out of the drying station 5 with the coating layer 12 in an at least partially viscous state.

Advantageously, in fact, the drying station 5 is suitably designed so as to not completely dry the coating layer 12 of the sheet-like element 11.

For example, the drying station 5 is designed in a manner such that, in the aforesaid drying step, the thermal treatment subjects the sheet-like element 11, with the coating layer 12 deposited in the preceding coating step, to a treatment temperature substantially comprised between 50 and 150 degrees centigrade, more preferably to a treatment temperature substantially comprised between 100 and 120 degrees centigrade, and still more preferably to a temperature of about 110 degrees centigrade.

Preferably, the sheet-like element 11 advances between the inlet section 23 and the outlet section 24 of the drying station 5 with an advancing speed comprised between 5 and 15 meters per minute, and still more preferably with a speed of about 10 meters per minute. Preferably, moreover, the drying station 5 is extended between its inlet section 23 and its outlet section 24 for an extension comprised between 4 and 10 meters. In other words, it is extended for a reduced extension with respect to the drying stations of known type, so as to determine only a partial drying of the coating layer 1 and not a complete drying.

In particular, in the drying step, the sheet-like element 11 is supplied out of the drying station 5 with the coating layer 12 which has a percentage of residual moisture substantially between 20% and 80%. Advantageously, with the term "residual moisture" it is intended the amount of moisture present in the coating layer 12, which is calculated as the ratio between the weight difference of the coating layer 12, between before and after the drying step, and the weight of the coating layer 12 itself before the drying step.

In accordance with the idea underlying the present invention, the present process also provides that in the compression step, at least one of the compression elements 9, 10 of the press 8 acts on the coating layer 12 in the at least partially viscous state, plastically deforming it.

Advantageously, in this manner, the present process is capable of exploiting the at least partially viscous state of the coating layer 12 in order to attain treatments of stretching or printing of the sheet-like element 11.

In accordance with the preferred embodiment illustrated in the enclosed figures, the compression elements 9, 10 of the press 8 comprise at least two counter-rotating rollers separated from each other by the passage slit 25, through which the sheet-like element 11 passes in order to be compressed between the counter-rotating rollers in the aforesaid compression step.

More in detail, the two counter-rotating rollers of the compression elements 9, 10 are advantageously placed one on top of the other with their rotation axes parallel: with the upper compression element 9 and the lower compression element 10.

Advantageously, in this manner, the passage slit 25 through which the sheet-like element 11 passes is defined between two external surfaces of the two counter-rotating rollers, which also act as third 33 for advancing the sheet-like element 11 through the compression station 7. It is of course possible that the compression station 7 also be provided with further third advancing means 33, which are adapted to convey the sheet-like element 11 towards the compression elements 9, 10 and to pick it up from such compression elements 9, 10 after the compression step.

In addition, in operation during the compression step, the compression elements 9, 10 of the press 8 compress the coating layer 12 in the at least partially viscous state, pushing such coating layer 12 within possible scratches and irregularities present on the surface of the sheet-like element 11, in a manner such that the scratches and irregularities are covered and hence are no longer visible following the present process.

Advantageously, at least one of the compression elements 9, 10 of the press 8 is provided with a working surface 13 which, in the compression step, acts in abutment against the coating layer 12. More in detail, the aforesaid working surface 13 is arranged at least on the compression element 9, 10 directed towards the coating layer 12, and in particular it is arranged on the upper compression element 9.

Advantageously, moreover, the working surface 13 is provided with at least one anti-adherent material layer 14, which is adapted to prevent the coating layer 12 in the at least partially viscous state from remaining glued to the working surface 13 during the compression step. Preferably, such anti-adherent material layer 14 is composed of one or more polymers selected from the group comprising PTFE, FEP, ETFE, PEEK, polyurethanes and silicones. Otherwise, such anti-adherent material layer 14 is composed of one or more resins of ceramic or carbon-ceramic type. Otherwise, additionally, such anti-adherent material layer 14 is composed of one or more vitreous materials.

Advantageously, the working surface 13 is arranged smooth in order to execute a stretching working of the coating layer 12 of the sheet-like element 11. Otherwise, the working surface 13 is arranged incised, in particular it is provided with a design obtained in relief, in order to execute a printing working of the coating layer 12 of the sheet-like element 11, which leaves a weave on the coating surface 12, for example of "faux-grain" type in order to reproduce the normal surface roughness of the hide.

Advantageously, at least one of the compression elements 9, 10 of the press 8, and preferably the compression element 9, 10 which in the compression step acts in abutment against the coating layer 12, is placed at an operating temperature lower than the temperature of the coating layer 12 itself. In operation, in this manner, in the compression step the aforesaid compression element 9, 10, coming into contact on the coating layer 12, determines a cooling of the coating layer 12 itself, and hence fixes the coating layer 12 on the sheet-like element 11.

Preferably, such operating temperature is comprised substantially between 0 and 40 degrees centigrade and still more preferably is about 20 degrees centigrade.

In accordance with the preferred embodiment illustrated in the enclosed figures, the compression element 9, 10 placed at the operating temperature is the upper compression element 9. Advantageously, therefore, such upper compression element 9 is adapted to stretch or print the coating layer 12 by means of its working surface 13 and, simultaneously, is also adapted to cool such coating layer 12 in order to fix the aforesaid stretching or printing working. It is also nevertheless possible that the compression station 7 be provided with a plurality of compression elements 9, 10 intended to act in abutment against the coating layer 12, in which a first compression element is provided with the aforesaid working surface 13 and a second compression element is placed at the aforesaid operating temperature, so as to separate the stretching or printing working from the fixing working.

More in detail, the coating layer 12 in the at least partially viscous state - in which it is found at the outlet of the drying station 5 - has a temperature slightly lower than that to which it was subjected during the thermal treatment and is also provided with a very thin thickness (comprised between several micrometers and several tens of millimeters). Therefore, when such coating layer 12 in the at least partially viscous state enters into contact with one of the compression elements 9, 10 at an operating temperature lower than its own, the temperature of the coating layer 12 suddenly falls due to its thermal inertia which is lower than that of the compression element 9, 10. In operation, therefore, such sudden lowering of temperature of the coating layer 12 determines a passage thereof from the at least partially viscous state to a solid state, fixing the coating layer 12 to the sheet-like element 11.

Preferably, the coating layer 12 in addition to the thermoplastic material 4 also comprises at least one fixing agent, in turn deposited on the sheet-like element 11 by the depositing means 3 of the coating station 2. In operation, such fixing agent modifies the thermoplastic properties of the thermoplastic material 4, preventing the coating layer 12, once it has exited from the compression station 7, to once again pass from the solidified state to the at least partially viscous state following a possible subsequent heating of the sheet-like element 11. Preferably, such at least one fixing agent is selected from the acetones group. Advantageously, the compression station 7 also comprises cooling means 15 operatively connected to at least the compression element 9, 10 placed at the operating temperature. In operation, therefore, in the compression step, the cooling means 15 maintain such compression element 9, 10 at the operating temperature, preventing this from being heated by the coating layer 12 or preventing a friction thereof with such coating layer 12. Advantageously, the cooling means 15 are suitably sized based on the quantity of sheet-like elements 11 that must be subjected to the compression step. In particular, if the apparatus 1 is adapted to treat tens of sheet-like elements 11 per hour, the compression elements 9, 10 of the press 8 are susceptible of being more greatly heated since they are continuously in contact with the sheet-like elements 11 exiting from the drying station 5. In this case, the cooling means 15 must be suitably sized so as to remove a high heat flow from such compression elements 9, 10.

In the present description, reference is always made to the upper compression element 9, advantageously provided with the operating surface 13 and advantageously placed at the operating temperature lower than the temperature of the coating layer 12. It is of course also possible to have the embodiment in which both compression elements 9, 10 of the press 8 are provided with the operating surface 13 provided with the insulating material layer 14, and in which both compression elements 9, 10 are placed at the operating temperature lower than the temperature of the coating layer 12, for example by the cooling means 15.

In addition, it is also possible to have the embodiment in which only the lower compression element 10 is advantageously provided with the operating surface 13 and is advantageously placed at the operating temperature lower than the temperature of the coating layer 12. Finally, it is also possible to have the embodiment in which one of the two compression elements 9, 10 is advantageously provided with the operating surface 13 and the other compression element 10, 9 is advantageously placed at the operating temperature lower than the temperature of the coating layer 12.

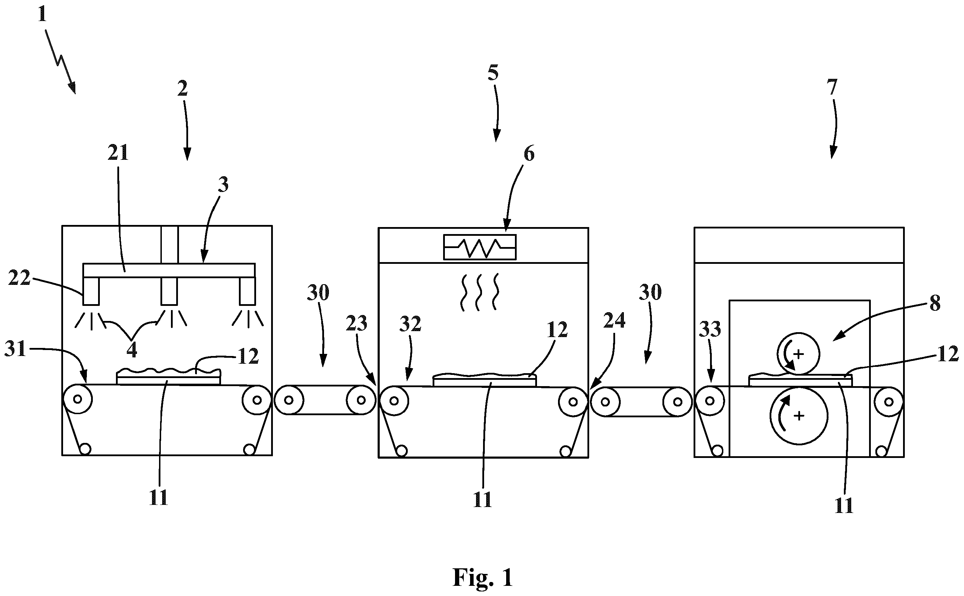

As anticipated above, the apparatus 1 comprises the advancing means 30, such as conveyor belts, which are advantageously placed between one working station and the next of the apparatus 1 itself and are adapted to advance the sheet-like element 11 along the apparatus 1. In particular, in accordance with the enclosed figure 1, the advancing means 30 are advantageously arranged between the coating station 2 and the drying station 5, and are adapted to pick up the sheet-like element 11 from the first advancing means 31 and to deposit it on the second advancing means 32. In addition, the advancing means 30 are advantageously arranged also between the drying station 5 and the compression station 7, and are adapted to pick up the sheet-like element 11 from the second advancing means 32 and to deposit it on the third advancing means 33. Of course, it is also possible to have the alternative embodiment, not illustrated in the enclosed figures, in which the advancing means 30 of the apparatus 1 comprise a single conveyor belt which is extended through the entire apparatus 1, between the coating 2, drying 5 and compression 7 stations.

In operation, the advancing means 30 allow avoiding the intervention of human operators in order to transfer the sheet-like elements 11 from one working station to the next, thus preventing the human operators from accidentally touching the thermoplastic material 4 of the coating layer 12 still in the liquid state or in the at least partially viscous state, risking to cast such coating layer 12 or to leave impressions which could permanently deform the coating layer 12 itself.

Preferably, the present process can be repeated multiple times on a same sheet-like element 11, for example in order to deposit multiple superimposed coating layers 12 on the same surface of the sheet-like element 11 or on the two main surfaces of the sheet-like element 11 itself.

Still more preferably the process can be repeated twice, so as to deposit two superimposed coating layers 12 on the sheet-like element 11, of which a first coating layer has bottom function and a second coating layer has finish function, in which the layer with bottom function preferably has a thickness greater than that of the layer with finish function.

The process for treating sheet-like elements thus conceived therefore allows attaining the preestablished objects. In particular, it allows employing an apparatus 1 having limited sizes and also allows reducing the times for treating the sheet-like elements 11, since they do not require rest steps.

## Claims

1. Process for treating sheet-like elements, obtained by means of an apparatus (1) which comprises:
- a coating station (2) provided with depositing means (3) adapted to deposit a thermoplastic material (4);
- a drying station (5) provided with heating means (6);
- a compression station (7) comprising at least one press (8) provided with at least two compression elements (9, 10) placed facing each other;
said process comprising:
- a coating step, in which at least one sheet-like element (11) traverses said coating station (2) and said depositing means (3) deposit on said sheet-like element (11) a coating layer (12) comprising said thermoplastic material (4) in the liquid state;
- after said coating step, a drying step, in which said sheet-like element (11) with said coating layer (12) traverses said drying station (5) and said heating means (6) apply a thermal treatment on said sheet-like element (11);
- after said drying step, a compression step, in which said sheet-like element (11) traverses said compression station (7) and the compression elements (9, 10) of said press (8) compress between them said sheet-like element (11) in order to impress said coating layer (12) on said sheet-like element (11);
said process being **characterized in that:**
in said drying step, said thermal treatment determines a partial drying of said coating layer (12) and said sheet-like element (11) is supplied out of said drying station (5) with said coating layer (12) in an at least partially viscous state;
in said compression step, at least one of the compression elements (9, 10) of said press (8) acts on said coating layer (12) in said at least partially viscous state, plastically deforming said coating layer (12).

2. Process according to claim 1, **characterized in that** at least one of the compression elements (9, 10) of said press (8) is provided with a working surface (13) which, in said compression step, acts in abutment against said coating layer (12); wherein said working surface (13) is provided with at least one anti-adherent material layer (14).

3. Process according to claim 1 or 2, **characterized in that** at least one of the compression elements (9, 10) of said press (8), which, in said compression step, acts in abutment against said coating layer (12), is at an operating temperature lower than the temperature of said coating layer (12);
wherein, in said compression step, said at least one compression element (9, 10), coming into contact on said coating layer (12), determines a cooling of said coating layer (12).

4. Process according to claim 3, **characterized in that** said compression station (7) comprises cooling means (15) operatively connected to said at least one compression element (9, 10); wherein, in said compression step, said cooling means (15) maintain said at least one compression element (9, 10) at said operating temperature.

5. Process according to any one of the preceding claims, **characterized in that** said thermoplastic material (4) is selected from among a group comprising acrylic polymers, polyurethane, butadienyl and vinyl.

6. Process according to any one of the preceding claims, **characterized in that** in said drying step, said thermal treatment subjects said sheet-like element (11) with said coating layer (12) to a treatment temperature substantially comprised between 50 and 150 degrees centigrade.

7. Process according to any one of the preceding claims, **characterized in that**, in said drying step, said sheet-like element (11) is supplied out of said drying station (5) with said coating layer (12) which has a percentage of residual moisture substantially comprised between 20% and 80%.

8. Process according to any one of the preceding claims, **characterized in that** the compression elements (9, 10) of said press (8) comprise at least two counter-rotating rollers separated from each other by a passage slit (25); wherein, in said compression step, said sheet-like element (11) passes into the passage slit (25) of said press (8) and is compressed between said two counter-rotating rollers.

## Patentansprüche

1. Verfahren zur Behandlung von Flachmaterial-Elementen, die mittels einer Vorrichtung (1) erzielt werden, die Folgendes umfasst:
- eine Beschichtungsstation (2), die mit Beschichtungselementen (3) ausgestattet ist, die geeignet sind, einen thermoplastischen Werkstoff (4) aufzubringen;
- eine Trockenstation (5), die mit Heizelementen (6) ausgestattet ist;
- eine Kompressionsstation (7), umfassend mindestens eine Presse (8), die mit mindestens zwei sich gegenüberliegenden Kompressionselementen (9, 10) ausgestattet ist;
wobei das genannte Verfahren Folgendes umfasst:
- einen Beschichtungsschritt, bei dem mindestens ein Flachmaterial-Element (11) die genannte Beschichtungsstation (2) überquert und das genannte Beschichtungselement (3) auf das genannte Flachmaterial-Element (11) eine den genannten thermoplastischen Werkstoff (4) in flüssigem Zustand enthaltende Beschichtungsschicht (12) aufbringt;
- nach dem genannten Beschichtungsschritt einen Trockenschritt, bei dem das genannte Flachmaterial-Element (11) mit der genannten Beschichtungsschicht (12) die genannte Trockenstation (5) überquert und die genannten Heizelemente (6) eine Wärmebehandlung auf dem genannten Flachmaterial-Element (11) ausführen;
- nach dem genannten Trockenschritt einen Kompressionsschritt, bei dem das genannte Flachmaterial-Element (11) die genannte Kompressionsstation (7) überquert und die Kompressionselemente (9, 10) der genannten Presse (8) zwischen sich das genannte Flachmaterial-Element (11) komprimieren, um die genannte Beschichtungsschicht (12) auf das genannte Flachmaterial-Element (11) aufzuprägen;
wobei das genannte Verfahren **dadurch gekennzeichnet ist, dass:**
bei dem genannten Trockenschritt die genannte Wärmebehandlung zu einem partiellen Trocknen der genannten Beschichtungsschicht (12) führt und das genannte Flachmaterial-Element (11) außerhalb der genannten Trockenstation (5) mit der genannten Beschichtungsschicht (12) in einem zumindest teilweise viskosen Zustand zur Verfügung gestellt wird;
bei dem genannten Kompressionsschritt mindestens eines der Kompressionselemente (9, 10) der genannten Presse (8) auf die genannte Beschichtungsschicht (12) in dem genannten mindestens teilweise viskosen Zustand einwirkt und so die genannte Beschichtungsschicht (12) verformt.

2. Verfahren nach Anspruch 1, **dadurch gekennzeichnet, dass** das mindestens eine Kompressionselement (9, 10) der genannten Presse (8) mit einer Arbeitsoberfläche (13) ausgestattet ist, die bei dem genannten Kompressionsschritt anschlagend gegen die genannte Beschichtungsschicht (12) wirkt; wobei die genannte Arbeitsoberfläche (13) mit mindestens einer Schicht aus Antihaftmaterial (14) ausgestattet ist.

3. Verfahren nach Anspruch 1 oder 2, **dadurch gekennzeichnet, dass** das mindestens eine Kompressionselement (9, 10) der genannten Presse (8), das bei dem genannten Kompressionsschritt anschlagend gegen die genannte Beschichtungsschicht (12) wirkt, eine Betriebstemperatur unter der Temperatur der genannten Beschichtungsschicht (12) aufweist.
wobei bei dem genannten Kompressionsschritt das genannte mindestens eine Kompressionselement (9, 10) bei Kontakt mit der genannten Beschichtungsschicht (12) ein Abkühlen der genannten Beschichtungsschicht (12) herbeiführt.

4. Verfahren nach Anspruch 3, **dadurch gekennzeichnet**, das die genannte Kompressionsstation (7) operativ mit dem genannten mindestens einem Kompressionselement (9, 10) verbundene Kühlelemente (15) umfasst;
wobei bei dem genannten Kompressionsschritt die genannten Kühlelemente (15) das genannte mindestens eine Kompressionselement (9, 10) bei der genannten Betriebstemperatur halten.

5. Verfahren nach einem beliebigen der vorangegangenen Ansprüche, **dadurch gekennzeichnet, dass** der genannte thermoplastische Werkstoff (4) aus einer Gruppe gewählt wird, die Acrylpolymere, Polyurethan, Butadienyl und Vinyl umfasst.

6. Verfahren nach einem beliebigen der vorangegangenen Ansprüche, **dadurch gekennzeichnet, dass** bei dem genannten Trockenschritt, die genannte Wärmebehandlung das genannte Flachmaterial-Element (11) mit der genannten Beschichtungsschicht (12) einer Behandlungstemperatur zwischen im Wesentlichen 50°C und 150°C aussetzt.

7. Verfahren nach einem beliebigem der vorangegangenen Ansprüche, **dadurch gekennzeichnet, dass** bei dem genannten Trockenschritt das genannte Flachmaterial-Element (11) aus der genannten Trockenstation (5) mit der genannten Beschichtungsschicht (12) austritt, die einen Prozentsatz Restfeuchtigkeit zwischen im Wesentlichen 20 % und 80 % aufweist.

8. Verfahren nach einem der vorangegangenen Ansprüche, **dadurch gekennzeichnet, dass** die Kompressionselemente (9, 10) der genannten Presse (8) mindestens zwei voneinander durch einen Durchgangsschlitz (25) getrennte gegenläufige Walzen umfassen; wobei bei dem genannten Kompressionsschritt das genannte Flachmaterial-Element (11) in den Durchgangsschlitz (25) der genannten Presse (8) eintritt und zwischen den beiden gegenläufigen Walzen komprimiert wird.

## Revendications

1. Procédé de traitement d'éléments en forme de feuille, obtenu au moyen d'un appareil (1) qui comprend :
- une station de revêtement (2) pourvue de moyens de dépôt (3) aptes à déposer une matière thermoplastique (4) ;
- une station de séchage (5) pourvue de moyens de chauffage (6) ;
- une station de compression (7) comprenant au moins une presse (8) pourvue d'au moins deux éléments de compression (9, 10) placés l'un en face de l'autre ;
ledit procédé comprenant :
- une étape de revêtement, dans laquelle au moins un élément en forme de feuille (11) traverse ladite station de revêtement (2) et lesdits moyens de dépôt (3) déposent sur ledit élément en forme de feuille (11) une couche de revêtement (12) comprenant ladite matière thermoplastique (4) à l'état liquide ;
- suite à ladite étape de revêtement, une étape de séchage, dans laquelle ledit élément en forme de feuille (11) avec ladite couche de revêtement (12) traverse ladite station de séchage (5) et lesdits moyens de chauffage (6) appliquent un traitement thermique sur ledit élément en forme de feuille (11) ;
- suite à ladite étape de séchage, une étape de compression, dans laquelle ledit élément en forme de feuille (11) traverse ladite station de compression (7) et les éléments de compression (9, 10) de ladite presse (8) compriment entre eux ledit élément en forme de feuille (11) afin de graver ladite couche de revêtement (12) sur ledit élément en forme de feuille (11) ;
ledit procédé **étant caractérisé en ce que** :
dans ladite étape de séchage, ledit traitement thermique détermine un séchage partiel de ladite couche de revêtement (12) et ledit élément en forme de feuille (11) est fourni par ladite station de séchage (5) avec ladite couche de revêtement (12) dans un état au moins partiellement visqueux ;
dans ladite étape de compression, au moins un des éléments de compression (9, 10) de ladite presse (8) agit sur ladite couche de revêtement (12) dans ledit état au moins partiellement visqueux, déformant plastiquement ladite couche de revêtement (12).

2. Procédé selon la revendication 1, **caractérisé en ce que** au moins un des éléments de compression (9, 10) de ladite presse (8) est pourvu d'une surface de travail (13) qui, dans ladite étape de compression, vient en butée contre ladite couche de revêtement (12) ; dans lequel ladite surface de travail (13) est pourvue d'au moins une couche de matériau antiadhérent (14).

3. Procédé selon la revendication 1 or 2, **caractérisé en ce que** au moins un des éléments de compression (9, 10) de ladite presse (8), qui, dans ladite étape de compression, vient en butée contre ladite couche de revêtement (12), est à une température de fonctionnement inférieure à la température de ladite couche de revêtement (12) ;
dans lequel, dans ladite étape de compression, ledit au moins un élément de compression (9, 10), venant en contact avec ladite couche de revêtement (12), détermine un refroidissement de ladite couche de revêtement (12).

4. Procédé selon la revendication 3, **caractérisé en ce que** ladite station de compression (7) comprend des moyens de refroidissement (15) reliés fonctionnellement audit au moins un élément de compression (9, 10) ;
dans lequel, dans ladite étape de compression, lesdits moyens de refroidissement (15) retiennent ledit au moins un élément de compression (9, 10) à ladite température de fonctionnement.

5. Procédé selon l'une quelconque des revendications précédentes, **caractérisé en ce que** ladite matière thermoplastique (4) est sélectionnée parmi le groupe comprenant des polymères acryliques, du polyuréthane, du butadiényle et du vinyle.

6. Procédé selon l'une quelconque des revendications précédentes, **caractérisé en ce que** dans ladite étape de séchage, ledit traitement thermique soumet ledit élément en forme de feuille (11) avec ladite couche de revêtement (12) à une température de traitement sensiblement comprise entre 50 et 150 degrés centigrades.

7. Procédé selon l'une quelconque des revendications précédentes, **caractérisé en ce que**, dans ladite étape de séchage, ledit élément en forme de feuille (11) est fourni par ladite station de séchage (5) avec ladite couche de revêtement (12) qui a un pourcentage d'humidité résiduelle sensiblement compris entre 20% et 80%.

8. Procédé selon l'une quelconque des revendications précédentes, **caractérisé en ce que** les éléments de compression (9, 10) de ladite presse (8) comprennent au moins deux rouleaux contrarotatifs séparés l'un de l'autre par une fente de passage (25) ; dans lequel, dans ladite étape de compression, ledit élément en forme de feuille (11) passe dans la fente de passage (25) de ladite presse (8) et est comprimé entre lesdits deux rouleaux contrarotatifs.
